(19) Europäisches Patentamt
European Patent Office
Office européen des brevets

(11) Veröffentlichungsnummer: **0 004 927**
**B1**

(12) # EUROPÄISCHE PATENTSCHRIFT

(45) Veröffentlichungstag der Patentschrift: 24.02.82

(21) Anmeldenummer: 79101083.8

(22) Anmeldetag: 09.04.79

(51) Int. Cl.³: C 08 G 18/08, C 09 D 3/72, C 08 G 18/38, C 08 G 18/50, C 08 G 18/77

(54) **In Wasser dispergierbare oder lösliche Polyurethane sowie ein Verfahren zu ihrer Herstellung.**

(30) Priorität: 18.04.78 DE 2816815

(43) Veröffentlichungstag der Anmeldung:
31.10.79 Patentblatt 79/22

(45) Bekanntmachung des Hinweises auf die Patenterteilung:
24.02.82 Patentblatt 82/8

(84) Benannte Vertragsstaaten:
BE DE FR GB IT NL SE

(56) Entgegenhaltungen:
DE - A - 2 446 440
DE - A - 2 551 094

(73) Patentinhaber: BAYER AG
Zentralbereich Patente, Marken und Lizenzen
D-5090 Leverkusen 1, Bayerwerk (DE)

(72) Erfinder: Nachtkamp, Klaus, Dr.
Odinshof 17
D-5060 Bergisch-Gladbach (DE)
Erfinder: Pedain, Josef, Dr.
Haferkamp 6
D-5000 Köln 80 (DE)
Erfinder: Noll, Klaus, Dr.
Morgengraben 6
D-5000 Köln 80 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 004 927 B1

Courier Press, Leamington Spa, England.

In Wasser dispergierbare oder lösliche Polyurethane, sowie ein Verfahren zu ihrer Herstellung

Verfahren zur Herstellung von in Wasser löslichen bzw. dispergierbaren Polyurethanen sind in großer Anzahl bekannt geworden (vgl. z.B. US-PSen 3 479 310, 3 756 992, 3 920 598, 3 905 929, GB—PS 1 076 688 oder DE—A 2 446 440, 2 551 094, 2 555 534). Weitere Verbesserungen dieser bekannten Verfahren sind Gegenstand der deutschen Offenlegungsschriften 26 51 505, 26 51 506, 26 59 617, 27 21 985, 27 25 589, 27 30 514, 27 32 131 und 27 34 576.

Diese Verfahren des Standes der Technik betreffen sowohl die Herstellung ionisch modifizierter Polyurethane (z.B. US-PSen 3 479 310, 3 756 992 oder GB—PS 1 076 688) als auch die Herstellung von nicht-ionisch hydrophil modifizierten Polyurethanen (z.B. US-PSen 3 920 598 bzw. 3 905 929), als auch die Herstellung von ionischen Gruppen und nicht-ionisch hydrophilen Gruppen aufweisenden Polyurethanen (DE—A 2 551 094). Insbesondere die Polyurethane der letztgenannten OS weisen eine Reihe bemerkenswerter Vorteile auf, sie sind trotz ihres Gehalt an ionischen Gruppen weitgehend unempfindlich gegen Elektrolyte und weisen eine ausgezeichnete Frostbeständigkeit auf. Außerdem fanden die Autoren der DE—A 2 551 094, daß bei kombiniertem Einbau ionischer und nicht-ionischer hydrophiler Gruppen die Gesamtkonzentration an hydrophilen Gruppen wesentlich geringer zu halten, als dies bei ausschließlichem Einbau von ionischen bzw. nicht-ionischen Gruppen zwecks Gewährleistung der Dispergierbarkeit der Polyurethane möglich ist.

Das nachstehend näher beschriebene erfindungsgemäße Verfahren stellt eine Verbesserung des Verfahrens der DE—A 2 551 094 dar, da erstmals hydrophile Aufbaukomponenten eingesetzt werden, welche end- und/oder seitenständig den Einbau sowohl von Sulfonatgruppen als auch von innerhalb einer Polyätherkette angeordneten, die Hydrophilie der Polyurethane stark erhöhenden Äthylenoxid-Einheiten aufweisen. Zur Einführung dieser unterschiedlichen hydrophilen Gruppen war beim Verfahren der DE—OS 2 551 094 noch die gleichzeitige Verwendung von sowohl Äthylenoxideinheiten aufweisenden Aufbaukomponenten als auch von mit diesen nicht identischen ionische Gruppen Aufweisenden Aufbaukomponenten erforderlich. Da beide dieser hydrophilen Aufbaukomponenten der DE—A 2 551 094 nicht nur aus den genannten hydrophilen Gruppierungen sondern naturgemäß zu einem beträchtlichen Gewichtsanteil auch aus Struktureinheiten bestehen, die nichts zur Dispergierbarkeit des Polyurethans beitragen, ist insgesamt der Einbau einer großen Menge der hydrophilen Aufbaukomponenten erforderlich, um die zur Dispergierbarkeit bzw. Löslichkeit benötigten hydrophilen Gruppen in das Polyurethan einzuführen. Dieser für die Dispergierbarkeit an sich überflüssige und für die sonstigen Eigenschaften der Polyurethane oft nachteilhafte "Ballast" wird beim nachstehend beschriebenen erfindungsgemäßen Verfahren auf ein absolutes Minimum reduziert, da erfindungsgemäß trotz des Einbaus von sowohl ionischen Gruppen (Sulfonatgruppen) als auch von nicht-ionischen hydrophilen Gruppen lediglich die Verwendung von einer einzigen, beide Zentren in sich vereinigenden hydrophilen Aufbaukomponente erforderlich ist.

Gegenstand der vorliegenden Erfindung sind in Wasser lösliche oder dispergierbare Polyurethaneelastomere mit weitgehend linearem Molekularaufbau, welche sowohl innerhalb von Polyätherketten eingebaute Äthylenoxideinheiten als auch Sulfonatgruppen aufweisen, dadurch gekennzeichnet, daß sie 0,5 bis 20 Gew.-% an innerhalb von Polyätherketten angeordneten Äthylenoxid-Einheiten der Formel $-CH_2-CH_2-O-$ und 0,1—25 Milliäquivalente pro 100 g Feststoff an Sulfonatgruppen der Formel $-SO_3^{\ominus}$ in Form von end- und/oder seitenständig angeordneten Struktureinheiten der Formel

$$-O-X-R$$

aufweisen, wobei

X für eine Polyalkylenoxidkette mit 5 bis 90 Kettengliedern steht, wobei mindestens 40% dieser Kettenglieder Äthylenoxid-Einheiten darstellen und

R einen einwertigen, mindestens eine Sulfonatgruppe $-SO_3^{\ominus}$ aufweisenden Kohlenwasserstoffrest mit 3 bis 18 Kohlenstoffatomen bedeutet.

Gegenstand der vorliegenden Erfindung ist auch ein Verfahren zur Herstellung von in Wasser löslichen oder dispergierbaren Polyurethanen durch Umsetzung von organischen Diisocyanaten mit im Sinne der Isocyanat-Polyadditionsreaktion difunktionellen endständige gegenüber Isocyanatgruppen reaktionsfähige Wasserstoffatome aufweisenden organischen Verbindungen des Molekulargewichtsbereichs 300—6000 und/oder niedermolekularen Verbindungen mit mindestens zwei gegenüber Isocyanatgruppen reaktionsfähigen Wasserstoffatomen eines unter 300 liegenden Molekulargewichts, unter Mitverwendung von die Löslichkeit bzw. Dispergierbarkeit der Polyurethane gewährleistenden hydrophilen Aufbaukomponenten, sowie gegebenenfalls unter Mitverwendung der in der Polyurethanchemie an sich bekannten Zusatzstoffe, dadurch gekennzeichnet, daß man als hydrophile Aufbaukomponente Struktureinheiten der Formel $-O-X-R$ mit der obengenannten Bedeutung aufweisende Mono- und/oder Diisocyanate und/oder mono- und/oder difunktionelle Verbindungen mit gegenüber Isocyanatgruppen reaktionsfähigen Wasserstoffatomen in solchen Mengen mitverwendet, daß in dem Polyurethan end- und seitenständig über derartige Gruppen gebunden 0,5 bis 20 Gew.-% an Äthylenoxideinheiten und 0,1 bis 25 Milliäquivalente pro 100 g an Sulfonatgruppen $-SO_3^{\ominus}$ vorliegen, wobei die genannten hydrophilen Gruppen insgesamt in einer die Löslichkeit bzw. Dispergierbarkeit der Polyurethane gewährleistenden Konzentration vorliegen.

Für das erfindungsgemäße Verfahren geeignete organische Diisocyanate sind beispielsweise solche der allgemeinen Formel $Q(NCO)_2$, wobei Q für einen organischen Rest steht, wie er durch Entfernung der Isocyanatgruppen aus einem organischen Diisocyanat des Molekulargewichtsbereichs 112—1000, vorzugsweise 140—400, erhalten wird. Besonders bevorzugte für das erfindungsgemäße Verfahren geeignete Diisocyanate sind solche der angegebenen alllgemeinen Formel, bei welchen R für einen zweiwertigen aliphatischen Kohlenwasserstoffrest mit 4—18 Kohlenstoffatomen, einen zweiwertigen cycloaliphatischen Kohlenwasserstoffrest mit 5—15 Kohlenstoffatomen, einen zweiwertigen aromatischen Kohlenwasserstoffrest mit 6—15 Kohlenstoffatomen oder einen araliphatischen Kohlenwasserstoffrest mit 7—15 Kohlenstoffatomen steht. Typische Vertreter von für das erfindungsgemäße Verfahren bevorzugt geeigneten organischen Diisocyanaten sind z.B. Tetramethylendiisocyanat, Hexamethylendiisocyanat, Dodecamethylendiisocyanat, Cyclohexan1,3- und -1,4-diisocyanat, 1-Isocyanato-3-isocyanatomethyl-3,5,5-trimethylcyclohexan (Isophorondiisocyanat), 4,4′-Diisocyanatodicyclohexylmethan oder auch aromatische Diisocyanate, wie 2,4-Diisocyanatotoluol, 2,6-Diisocyanatotoluol, aus diesen Isomeren bestehende Gemische, 4,4′-Diisocyanatodiphenylmethan, 1,5-Diisocyanatonaphthalin usw..

Für das erfindungsgemäße Verfahren geeignete, im Sinne der Isocyanat-Polyaddition difunktionelle endständige, gegenüber Isocyanat reaktionsfähige Gruppen aufweisende Verbindungen des Molekulargewichtsbereichs 300—6000, vorzugsweise 500—3000, sind insbesondere

1. die in der Polyurethan-Chemie an sich bekannten Dihydroxypolyester aus Dicarbonsäuren, wie Bernsteinsäure, Adipinsäure, Korksäure, Azelainsäure, Sebacinsäure, Phthalsäure, Isophthalsäure, Terephthalsäure, Tetrahydrophthalsäure usw. und Diolen, wie z.B. Äthylenglykol, Propylenglykol-1,2, Propylenglykol-1,3, Diäthylenglykol, Butandiol-1,4, Hexandiol-1,6, Octandiol-1,8, Neopentylglykol, 2-Methylpropandiol-1,3, oder die verschiedenen isomeren Bishydroxymethylcyclohexane;
2. die in der Polyurethan-Chemie an sich bekannten Polylactone, wie z.B. die auf den obengenannten zweiwertigen Alkoholen gestartete Polymerisate des -Caprolactons;
3. die in der Polyurethan-Chemie an sich bekannten Polycarbonate, wie sie durch Umsetzung beispielsweise der obengenannten Diole mit Diarylcarbonaten oder Phosgen zugänglich sind;
4. die in der Polyurethan-Chemie an sich bekannten Polyäther, wie z.B. die unter Verwendung von zweiwertigen Startermolekülen, wie Wasser, den obengenannten Diolen oder 2 NH-Bindungen aufweisenden Aminen hergestellten Polymerisate bzw. Mischpolymerisate des Styroloxids, Propylenoxids, Tetrahydrofurans, Butylenoxids oder Epichlorhydrins. Auch Äthylenoxid kann anteilmäßig mitverwendet werden mit der Maßgabe, daß der verwendete Polyäther maximal ca. 10 Gew.-% an Äthylenoxid enthält. Im allgemeinen werden jedoch solche Polyäther eingesetzt, die ohne Mitverwendung von Äthylenoxid erhalten wurden;
5. die in der Polyurethan-Chemie an sich bekannten Polythioäther, Polythiomischäther, Polythioätherester;
6. die in der Polyurethan-Chemie an sich bekannten Polyacetale, beispielsweise aus den obengenannten Diolen und Formaldehyd; sowie
7. difunktionelle endständige, gegenüber Isocyanatgruppen reaktionsfähige Gruppen aufweisende Polyätherester.

Bevorzugt werden beim erfindungsgemäßen Verfahren Dihydroxypolyester, Dihydroxypolylactone, Dihydroxypolyather und Dihydroxypolycarbonate eingesetzt.

Grundsätzlich können die erfindungsgemäßen Verbindungen jedoch auch ohne Mitverwendung von höhermolekularen Polyhydroxylverbindungen, d.h. ausschließlich unter Verwendung von Diisocyanaten und niedermolekularen Reaktionspartnern (Molekulargewicht $< 300$) hergestellt werden.

Als beim erfindungsgemäßen Verfahren zur Herstellung der selbst dispergierbaren Polyurethane mitzuverwendende Kettenverlängerer eines unter 300 liegenden Molekulargewichts kommen beispielsweise die bei der Herstellung der Dihydroxypolyester beschriebenen niedermolekularen Diole oder auch Diamine, wie Diaminoäthan, 1,6-Diaminohexan, Piperazin, 2,5-Dimethylpiperazin, 1-Amino-3-aminomethyl-3,5,5-trimethylcyclohexan (Isophorondiamin), 4,4′-Diaminodicyclohexylmethan, 1,4-Diaminocyclohexan, 1,2-Propylendiamin oder auch Hydrazin, Aminosäurehydrazide, Hydrazine von Semicarbazidocarbonsäuren, Bis-hydrazide und Bis-semicarbazide in Betracht. Die beispielhaft genannten Diamin-Kettenverlängerungsmittel können beim erfindungsgemäßen Verfahren auch in blockierter Form, d.h. beispielsweise in Form der entsprechenden Bis-ketimine, hergestellt durch Umsetzung der Amine mit geeigneten Ketonen wie z.B. Methyläthylketon, eingesetzt werden, wobei beispielsweise NCO-Präpolymere in Abwesenheit von Wasser mit den, gegenüber Isocyanatgruppen inerten, blokkierten Diaminen abgemischt werden können, worauf sich ein Vermischen der so erhaltenen Mischungen mit Wasser anschließt. Hierbei werden die Aminogruppen hydrolytisch zurückgebildet, so daß die üblich Kettenverlängerungsreaktion in wäßriger Phase stattfinden kann. Insbesondere bei Verwendung derartiger verkappter Diamin-Kettenverlängerer kann das gegebenenfalls zur Kompensation der Monofunktionalität beispielsweise monofunktioneller hydrophiler Aufbaukomponenten mitverwendete höher als difunktionelle Polyisocyanat einfach mit dem difunktionellen NCO-Präpolymer abgemischt werden, worauf sich eine Kettenverlängerungsreaktion des so erhaltenen im statistischen Mittel etwa difunktionellen Systems anschließt.

Neben den genannten im Sinne der Isocyanatpolyadditionsreaktion difunktionellen Aufbaukomponenten können in besonderen Fällen, in welchen eine Verzweigung der Polyurethane erwünscht ist, auch die in der Polyurethanchemie an sich bekannten tri- und höherfunktionellen Aufbaukomponenten anteilweise mitverwendet werden. Dies ist insbesondere dann vorteilhaft, wenn monofunktionelle hydrophile Polyäther eingesetzt werden. Die mittlere Funktionalität der Aufbaukomponenten soll jedoch vorzugsweise 2,1 nicht übersteigen.

Als hydrophile Aufbaukomponente werden beim erfindungsgemäßen Verfahren beliebige Isocyanatgruppen oder gegenüber Isocyanatgruppen reaktionsfähige Gruppen und in beiden Fällen Gruppen der Formel

$$—O—X—R$$

aufweisende Verbindungen mitverwendet.

In dieser Formel stehen

R für einen mindestens ein Sulfonatanion $—SO_3^{\ominus}$ aufweisenden Kohlenwasserstoffrest mit 3 bis 18 Kohlenstoffatomen, der im übrigen auch noch weitere inerte Substituenten wie beispielsweise Alkoxygruppen oder Halogenatome aufweisen kann, und

X für eine Polyalkylenoxid-Polyätherkette mit 5 bis 90 vorzugsweise 15 bis 70 Kettengliedern, welche zumindest zu 40%, vorzugsweise zu mindestens 65% aus Äthylenoxideinheiten und daneben gegebenenfalls aus Styroloxid-, Butylenoxid- oder vorzugsweise Propylenoxid-Einheiten bestehen.

Beim erfindungsgemäßen Verfahren einzusetzende, Gruppierungen der genannten Struktur aufweisende hydrophile Aufbaukomponenten sind insbesondere Struktureinheiten der genannten Formel aufweisende Mono- oder Diisocyanate, sowie Struktureinheiten der genannten Formel aufweisende ein oder zweiwertige Alkohole.

Ausgangsmaterialien zur Herstellung der hydrophilen Aufbaukomponenten sind im allgemeinen Verbindungen der Formel

$$HO—R'$$

in welcher

R' für einen vorzugsweise einfach ungesättigten aliphatischen Kohlenwasserstoffrest mit 3 bis 18, vorzugsweise 3 bis 6 Kohlenstoffatomen, einen vorzugsweise einfach ungesättigten cycloaliphatischen oder gemischt cycloaliphatisch/aliphatischen Kohlenwasserstoffrest mit 4 bis 10 Kohlenstoffatomen oder weniger bevorzugt für einen aromatischen oder araliphatischen Kohlenwasserstoffrest mit insgesamt 9 bis 15 Kohlenstoffatomen steht, der vorzugsweise einen einfach olefinisch ungesättigten Substituenten aufweist, dessen Doppelbindung mit dem aromatischen Ring nicht in Konjugation steht.

Selbstverständlich können auch solche Ausgangsmaterialien zur Herstellung der hydrophilen Aufbaukomponenten verwendet werden, deren Rest R' inerte Substituenten wie beispielsweise Alkoxyreste oder Halogenatome aufweist.

Beispiele geeigneter Ausgangsmaterialien HO—R' sind Allylalkohol, 1-Hydroxy-Δ2,3-hexen, 1-Hydroxy-Δ3,4-hexen, 1-Hydroxy-Δ9,10-octadecen, Cyclohexen-3-ol, olefinisch ungesättigte, eine alkoholische Hydroxylgruppe aufweisende, bicyclische Additionsprodukte des Cyclopentadiens wie z.B. die Verbindung der Formel

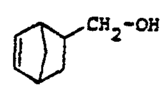

oder p-Allyl-benzylalkohol bzw. p-Allyl-phenol.

Aus den beispielhaft genannten Ausgangsmaterialien

$$HO—R'$$

gelingt nun in einfacher, zweistufiger Reaktion die Herstellung von bereits als hydrophile Aufbaukomponente geeigneten einwertigen Alkoholen der Formel

$$HO—X—R$$

Hierzu werden die Ausgangsmaterialien in an sich bekannter Weise unter Verwendung von Äthylenoxid und gegebenenfalls weiteren Alkylenoxiden entsprechend den obengemachten Ausführungen bezüglich der Zusammensetzung der Polyalkylenoxidpolyätherkette alkoxyliert. Im zweiten Reaktionsschritt wird dann an die olefinische Doppelbindung des erhaltenen monofunktionellen Polyätheralkohols Ammonium- oder Alkalibisulfit angelagert. Dies geschieht vorzugsweise dergestalt, daß man den ungesättigten Polyätheralkohol mit einer wäßrigen Lösung eines dem Bisulfit entsprechenden Pyrosulfit unter oxydativen Bedingungen (Luftzufuhr) bei ca. 100°C umsetzt. Nach Ansäuern auf einen pH-Wert von ca. 2—3 wird überschüssiges Schwefeldioxid durch Einleiten von Luft entfernt. Die Hauptmenge

des Wassers wird anschließend abdestilliert, Wasserreste werden mit Toluol als Schleppmittel abgetrennt. Als Rückstand verbleibt der Polyätheralkohol der Formel

$$HO—X—R$$

bzw. dessen Lösung in Toluol. Die gebildeten anorganischen Salz können durch Filtration entfernt werden.

Die Natur des Kations entspricht natürlich dem im Bisulfit bzw. Pyrosulfit vorliegenden Kation. Das Kation ist für die weitere erfindungsgemäße Umsetzung von untergeordneter Bedeutung. Im allgemeinen gelangen erfindungsgemäß Lithium-, Kalium-, Natrium- oder Ammoniumsalze zum Einsatz. Die Natrium- und Kaliumsalze sind besonders bevorzugt.

Wie bereits dargelegt eignen sich die Verbindungen der Formel

$$HO—X—R$$

bereits als hydrophile Aufbaukomponente beim erfindungsgemäßen Verfahren. Es ist oft jedoch zweckmäßig diese Verbindungen vor ihrem Einsatz als hydrophile Aufbaukomponente weiter zu modifizieren.

So können beispielsweise die hydrophilen Verbindungen der Formel

$$HO—X—R$$

in Analogie zur Verfahrensweise der US—PS 3 905 929 durch Umsetzung mit Diisocyanaten der Formel

$$Q(NCO)_2$$

der oben beispielhaft genannten Art in die entsprechenden hydrophilen Monoisocyanate der Formel

$$OCN—Q—NH—CO—O—X—R$$

überführt werden. Auch diese Monoisocyanate stellen beim erfindungsgemäßen Verfahren verwendbare hydrophile Aufbaukomponenten dar.

Aus den genannten Monoisocyanaten können jedoch auch gewünschtenfalls in Analogie zu der in US—PS 3 905 929 gelehrten Verfahrensweise durch Umsetzung mit Dialkanolaminen der in US—PS 3 905 929, Kolonne 6, Zeile 9 genannten Formel als erfindungsgemäß einsetzbare hydrophile Aufbaukomponente geeignete Glykole der Formel

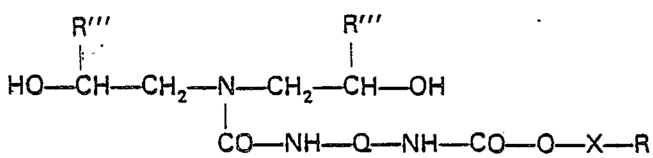

hergestellt werden, wobei
Q, R und X die bereits genannte Bedeutung haben und
R''' vorzugsweise für Wasserstoff oder eine Methylgruppe steht.

Die hydrophilen einwertigen Alkohole der Formel

$$HO—X—R$$

können jedoch auch in Analogie zur Lehre der US—PS 3 920 598 mit Diisocyanaten $Q(NCO)_2$ zu den Allophanatpolyisocyanaten der Formel

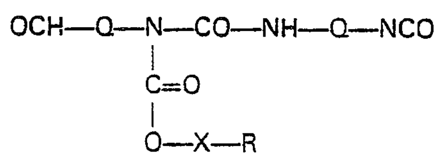

umgesetzt werden, welche ihrerseits als hydrophile Aufbaukomponente beim erfindungsgemäßen Verfahren eingesetzt werden können.

Im Falle der Verwendung der im Sinne der Isocyanat-Additionsreaktion monofunktionellen hydrophilen Aufbaukomponenten neben ansonsten ausschließlich difunktionellen Aufbaukomponenten der beispielhaft genannten Art erfolgt der Einbau der hydrophilen Gruppen

—O—X—R

vorzugsweise endständig, während bei Verwendung der difunktionellen hydrophilen Aufbaukomponenten die hydrophile Gruppe seitenständig in das Makromolekül eingebaut wird.

Die beispielhaft genannten hydrophilen Aufbaukomponenten werden im übrigen bezüglich ihrer Art und Menge so ausgewählt, daß in den erfindungsgemäßen Polyurethanen 0,5 bis 20 vorzugsweise 2 bis 15 Gew.-% an innerhalb der Polyätherkette—X eingebauten Äthylenoxideinheiten und 0,1 bis 25 vorzugsweise 0,4 bis 20 Milliäquivalente pro 100 g Feststoff an Sulfonatanionen —$SO_3^{\ominus}$ vorliegen. Die Gesamtmenge der genannten hydrophilen Zentren wird dabei so gewählt, daß die Wasserlöslichkeit bzw. Wasserdispergierbarkeit der erfindungsgemäßen Verfahrensprodukte gewährleistet ist. Dabei werden bei geringen Mengen grob bis feinteilige Dispersionen und bei steigenden Mengen an hydrophilen Aufbaukomponenten innerhalb der genannten Bereiche opake bis klare Lösungen erhalten. Das Verhältnis zwischen Äthylenoxideinheiten und Sulfonatanionen in den hydrophilen Zentren kann innerhalb der obengenannten breiten Bereiche schwanken und ist beispielsweise durch Wahl des Alkoxylierungsgrades bei der Herstellung der hydrophilen einwertigen Alkohole, durch Wahl des Äquivalentverhältnisses der einzelnen Alkylenoxide und auch durch Wahl der Anzahl der im Rest —R' enthaltenen Doppelbindungen einzustellen.

Die Durchführung des erfindungsgemäßen Verfahrens zur Herstellung der selbst-dispergierbaren Polyurethane kann nach den an sich bekannten Methoden der Polyurethanchemie sowohl nach dem Einstufen- als auch dem Zweistufen-Verfahren (Präpolymer-Verfahren) erfolgen.

Bei der Herstellung der selbst-dispergierbaren Polyurethane kommen die Reaktionspartner in einem Äquivalentverhältnis von Isocyanatgruppen zu gegenüber Isocyanatgruppen reaktionsfähigen Gruppen von 0,8:1 bis 2,5:1, vorzugsweise 0,95:1 bis 1,5:1 zum Einsatz. Bei der Verwendung eines NCO-Überschusses entstehen dabei naturgemäß NCO-Gruppen aufweisende Verbindungen, die bei ihrer Überführung in eine wäßrige Dispersion mit dem Wasser unter Kettenverlängerung zu dem dispergierten Endprodukt weiterreagieren. Dementsprechen beinhaltet das obige Äquivalentverhältnis alle am Aufbau der erfindungsgemäßen Polyurethane beteiligten Komponenten inklusive dem gegebenenfalls in Form wäßriger Lösungen verwendeten Aminogruppen aufweisenden Kettenverlängerungsmittel, nicht jedoch den Anteil des zur Dispergierung der Polyurethane eingesetzten Wassers, welches mit gegebenenfalls vorliegenden NCO-Gruppen aufweisenden Verbindungen unter Kettenverlängerungsreaktion reagiert.

Sowohl bei der Durchführung des Einstufen- als auch des Zweistufen-Verfahrens kann in Gegenwart oder auch Abwesenheit von Lösungsmitteln gearbeitet werden. Geeignete Lösungsmittel, insbesondere wenn—wie unten beschrieben—während oder im Anschluß an die Polyurethanherstellung die Überführung der Polyurethane in eine wäßrige Dispersion beabsichtigt ist, sind beispielsweise mit Wasser mischbare, gegenüber Isocyanatgruppen indifferente Lösungsmittel mit einem unter 100°C liegenden Siedepunkt wie z.B. Aceton oder Methyläthylketon.

Bei der Durchführung des Einstufenverfahrens werden bevorzugt die oben unter 1. bis 7. genannten difunktionellen endständige, gegenüber Isocyanatgruppen reaktionsfähige Gruppen aufweisenden Verbindungen des Molekulargewichtsbereichs 300 bis 6000 mit den hydrophilen Komponenten sowie dem gegebenenfalls mitzuverwendenden Kettenverlängerer eines unter 300 liegenden Molekulargewichts gemischt. Der so erhaltenen Mischung wird anschließend die Diisocyanatkomponente in Abwesenheit von Lösungsmitteln zugegeben, wonach das Reaktionsgemisch vorzugsweise bei 50 bis 150°C liegenden Temperaturen, gegebenenfalls nach Zugabe der in der Polyurethanchemie an sich bekannten Katalysatoren zur Reaktion gebracht wird. Die Menge der Diisocyanatkomponenten wird hierbei so gewählt, daß ein NCO/OH-Verhältnis von 0,8 bis 1,05 vorliegt. Während der Reaktion steigt die Viskosität der Reaktionsmischung an, so daß der Mischung nach und nach eines der genannten Lösungsmittel zugegeben wird. Schließlich wird eine organische Lösung des ausreagierten Polyurethans erhalten, deren Konzentration vorzugsweise auf 10 bis 70, insbesondere 15 bis 55 Gew.-% Feststoff eingestellt wird.

Die Durchführung der gelösten Polyurethanelastomeren in eine wäßrige Dispersion erfolgt dann zweckmäßigerweise durch Zugabe von Wasser zu der gerührten Lösung. Dabei wird in vielen Fällen die Phase einer Wasser-in-Öl-Emulsion durchlaufen, wonach sich unter gleichzeitiger Überwindung eines Viskositätsmaximums der Umschlag in eine Öl-in-Wasser Emulsion ergibt. Nach destillativer Entfernung des Lösungsmittels bleibt eine rein wäßrige stabile Dispersion zurück.

Bei der Durchführung des Zweistufenverfahrens wird vorzugsweise zunächst in der Schmelze aus überschüssigem Diisocyanat, höhermolekularer Verbindung mit gegenüber Isocyanatgruppen reaktionsfähigen Gruppen der oben unter 1. bis 7. beispielhaft genannten Art sowie hydrophilen Komponenten unter Einhaltung eines NCO/OH-Verhältnisses von 1,1:1 bis 3,5:1, vorzugsweise 1,2:1 bis 2,5:1 in Abwesenheit von Lösungsmitteln oder auch bereits in Gegenwart von Lösungsmitteln ein NCO-Präpolymer hergestellt, welches bei Abwesenheit von Lösungsmitteln anschließend, beispielsweise in einem geeigneten Lösungsmittel aufgenommen wird. Die so erhaltene Lösung des Präpolymeren kann dann in an sich bekannter Weise mit dem Kettenverlängerungsmittel der oben beispielhaft aufgeführten Art eines unter 300 liegenden Molekulargewichts zur Reaktion gebracht werden. Zur Herstellung der Erfindungsgemäßen Polyurethandispersionen empfiehlt sich eine

besondere Variante des Zweistufenverfahrens, bei welcher die beschriebene Lösung des NCO-Präpolymeren mit der Lösung des Kettenverlängerungsmittels—hier werden bevorzugt die genannten Diamine bzw. Hydrazinderivate als Kettenverlängerer eingesetzt—in geringen Mengen Wasser oder einem Wasser/Lösungsmittelgemisch so versetzt, daß das NCO/NH-Verhältnis zwischen 2,5 und 1,05 liegt. Diese Umsetzung kann bei Raumtemperatur oder auch vorzugsweise bei 25—60°C erfolgen. Durch nachträgliche Zugabe des restlichen Wassers und anschließende Entfernung des Lösungsmittels wird schließlich die Polyurethan-Dispersion erhalten. Es ist bei dieser Verfahrensvariante jedoch auch möglich, den Kettenverlängerer in der Gesamtmenge des in der Dispersion schließlich vorliegenden Wassers (50 bis 200 Gew.-%, bezogen auf festes Polyurethan) zu lösen.

Das beschriebene Zweistufenverfahren kann jedoch auch ohne größere Schwierigkeiten lösungsmittelfrei durchgeführt werden; und zwar dergestalt, daß man das beschriebene NCO-Präpolymer lösungsmittelfrei herstellt und als Schmelze in das Wasser einrührt, wobei auch hier die genannten Aminogruppen aufweisenden Kettenverlängerer in im Wasser gelöster Form vorliegen können.

Sofern Polyurethane mit endständigen monofunktionellen hydrophilen Polyäther hergestellt werden, wird vorzugsweise für eine zumindest geringe Verzweigung dieser Produkte Sorge getragen, z.B. durch anteilige Mitverwendung tri- oder polyfunktioneller Aufbaukomponenten oder durch teilweise Allophanatisierung, Trimerisierung oder Biuretisierung, wobei jedoch die mittlere Funktionalität der Aufbaukomponenten vorzugsweise 2,1 nicht übersteigt. Das so erhaltene als Schmelze oder als Lösung vorliegende erfindungsgemäße Polyurethan kann durch Vermischen mit Wasser und gegebenenfalls anschließendem Abdestillieren des Hilfslösungsmittels in eine wäßrige Dispersion überführt werden.

Grundsätzlich können die erfindungsgemäßen Polyurethane nach beliebigen Verfahren in wäßrige Dispersionen überführt werden. Zu erwähnen wären hier als Beispiele die Dispergierung ohne Verwendung von Lösern, z.B. durch Vermischung der Polyurethanschmelze mit Wasser in Geräten, die hohe Schergefälle erzeugen können, sowie die Verwendung von sehr geringen Mengen Lösungsmitteln zur Plastifizierung bei der Verarbeitung in den gleichen Geräten, weiterhin die Zuhilfenahme nicht mechanischer Dispergiermittel, wie Schallwellen extrem hoher Frequenz. Schließlich ist auch bei Polyurethanharnstoffen die Kettenverlängerung nach der Überführung des Prepolymers in eine wäßrige Emulsion möglich. Es können jedoch auch einfache Mischer, z.B. Rührkessel oder sogenannte Durchlaufmischer Verwendung finden, da die Polyurethane gemäß Erfindung selbstdispergierbar sind.

Die Dispersionen können mit anderen anionischen oder nichtionischen Dispersion verschnitten werden, wie z.B. mit Polyvinylacetat, Polyäthylen-, Polystyrol-, Polybutadien-, Polyvinylchlorid- Polyacrylat, und Copolymerisat-Kunststoff-Dispersionen. Auch der Zusatz von an sich bekannten chemisch nicht fixierten vorzugsweise ionischen Emulgatoren ist möglich, jedoch selbstverständlich nicht erforderlich.

Schließlich können auch Füllstoffe, Weichmacher, Pigmente, Ruß- und Kieselsäuresole, Aluminium-, Ton-, Asbest-Dispersionen in die Dispersionen eingearbeitet werden.

Die Dispersionen der Polyurethanmassen in Wasser sind meist stabil, lager- und versandfähig und können zu beliebig späterem Zeitpunkt, z.B. formgebend, verarbeitet werden. Sie trocknen im allgemeinen unmittelbar zu formstabilen Kunststoffüberzügen auf, jedoch kann die Formgebung der Verfahrensprodukte auch in Gegenwart von an sich bekannten Vernetzungsmitteln erfolgen. Je nach der gewählten chemischen Zusammensetzung und dem Gehalt an Urethangruppen erhält man Polyurethane mit unterschiedlichen Eigenschaften. So können weiche klebrige Massen, thermoplastische und gummielastische Produkte der verschiedensten Härtegrade bis zu glasharten Duroplasten erhalten werden. Die Hydrophilie der Produkte kann ebenfalls in gewissen Grenzen schwanken. Die elastischen Produkte lassen sich bei höheren Temperaturen, beispielsweise 100—180°C, thermoplastisch verarbeiten, sofern sie nicht chemisch vernetzt sind.

Die Verfahrensprodukte sind zur Beschichtung bzw. zum Überziehen und zum Imprägnieren von gewebten und nichtgewebten Textilien, Leder, Papier, Holz, Metallen, Keramik, Stein, Beton, Bitumen, Hartfser, Stroh, Glas, Porzellan, Kunststoffen der verschiedensten Art, Glasfasern, zur antistatischen und knitterfreien Ausrüstung, als Binder für Vliese, Klebstoffe, Haftvermittler, Kaschierungsmittel, Hydrophobiermittel, Weichmacher, Bindemittel, z.B. für Korkoder Holzmehl, Glasfasern, Asbest, papierartige Materialien, Plastik- oder Gummiabfälle, keramische Materialien, als Hilfsmittel im Zeugdruck und in der Papierindustrie, als Zusatz zu Polymerisaten, als Schlichtemittel, beispielsweise für Glasfasern, und zur Lederausrüstung geeignet.

Vorzugsweise werden die Dispersionen bzw. Pasten dabei auf eine poröse Unterlage appliziert, die anschließend mit dem Fertigprodukt verbunden bleibt, wie z.B. gewebte oder nichtgewebt textile Gebilde bzw. Fasermatten, Filze oder Vliese, auch Papiervliese, Schaumstoff-Folien oder Spaltleder, die vermöge ihrer Saugwirkung eine sofortige Verfestigung des Überzuges bewirken. Anschließend wird bei erhöhter Temperatur getrocknet und gegebenenfalls verpreßt. Die Trocknung kann aber auch auf glatten porösen oder nichtporösen Materialien, z.B. Metall, Glas, Papier, Karton, keramischen Materialien, Stahlblech, Silikon-Kautschuk, Aluminiumfolie, erfolgen, wobei das fertige Flächengebilde anschließend abgehoben und als solches verwendet bzw. nach dem Umkehrverfahren durch Kleben, Flammkaschieren, Kalandern auf ein Substrat aufgebracht wird. Die Applikation nach dem Umkehrverfahren kann dabei zu einem beliebigen Zeitpunkt vorgenommen werden.

Durch Mitverwendung von Vinylpolymerisaten oder aktiven bzw. inaktiven Füllstoffen kann man die Eigenschaften der Verfahrensprodukte abwandeln. Verwendbar sind beispielsweise Polyäthylen, Polypropylen, Polyvinylacetat, Äthylen-Vinyl-acetat-Copolymerisate, die gegebenfalls (teilweise) verseift und/oder mit Vinylchlorid gepfropft sein können, Styrol-Butadien-Copolymerisate, Äthylen-(Pfropf)-Copolymerisate, Polyacrylate, Ruß, Kieselsäure, Asbest, Talkum, Kaolin, Titandioxid, Glas als Pulver oder in Form von Fasern, Cellulose. Je nach gewünschtem Eigenschaftsbild und Verwendungszweck der Endprodukte können bis zu 70%, bezogen auf Gesamttrockensubstanz solcher Füllstoffe, im Endprodukt enthalten sein.

Selbstverständlich können auch Farbstoffe, Pigmente, Weichmacher oder die rheologischen Eigenschaften beeinflussende Zusätze beigefügt werden.

Die Trocknung der nach verschiedenen Applikationstechniken erhaltenen Produkte kann bei Raumtemperatur oder bei erhöhter Temperatur erfolgen. Die im Einzelfall zu wählende Trocknungstemperatur, die außer von der chemischen Zusammensetzung des Materials von allem von Feuchtigkeitsgehalt, der Trockenzeit und der Schichtdicke abhängt, wird leicht durch einen Vortest ermittelt. Bei gegebener Erhitzungszeit muß die Trockentemperatur in jedem Fall unter der Verfestigungstemperatur liegen.

Anschließend können die Flächengebilde zur Erhöhung der Widerstandsfähigkeit ihrer Oberfläche mit einer Appretur (Finish) überzogen werden. Bevorzugt werden hierfür wiederum wäßrige Dispersionen oder Lösungen verwendet.

Aus feinteiligen Dispersionen und Solen erhaltene sehr harte Polyurethane sind als Einbrennlacke und teilweise sogar als lufttrocknende Lacke geeignet. Sie verbinden hohe Härte und Elastizität mit gutem Hochglanz und—bei Verwendung mit aliphatischen Diisocyanaten—mit guter Licht- und Wetterechtheit.

Die nachfolgenden Beispiele sollen die Zusammensetzung, Herstellung und einige physikalische Eigenschaften erläutern.

Die in den nachstehenden Beispielen gemachten Prozentangaben beziehen sich, soweit nicht anders vermerkt, auf Gewichtsprozente.

*Herstellung eines Sulfonatgruppen tragenden Polyäthermonoalkohols 1*

1000 g eines auf Allylalkohol gestarteten Polyäthers aus Äthylenoxid und Propylenoxid (Molverhältnis 85:15) der OH-Zahl 56,2 werden zusammen mit 190 g Natriumpyrosulfit ($Na_2S_2O_5$) in 200 g Wasser gelöst. Unter Durchleiten eines fein verteilten Luftstroms wird die Lösung 24 Stunden bei 100°C gerührt. Anschließend wird auf Raumtemperatur abgekühlt und mit 50%iger Schwefelsäure bis auf einen pH-Wert von 2,0 angesäuert. Man leitet nun unter gutem Rühren weitere 10 Stunden Luft durch die Lösung, bis die Hauptmenge des überschüssigen Schwefeldioxids entfernt ist und stellt anschließend den pH-Wert mit 20%iger Natronlauge auf 6,0 ein. Dann wird das Wasser im Vakuum abdestilliert. Wenn die Hauptmenge entfernt ist, gibt man 500 g Toluol zu und destilliert das restliche Wasser azeotrop mit dem Toluol ab. Das verbleibende Produkt unterwirft man zur Entfernung der gebildeten anorganischen Salze einer Druckfiltration.

Der so erhaltene, Sulfonatgruppen tragende Polyäthermonoalkohol ist gelblich gefärbt und besitzt eine Viskosität von ca. 5000 mPa·s (20°C); der analytisch bestimmte Schwefelgehalt beträgt 3,0%. Der Gehalt an Sulfonatgruppen ($SO_3^{\ominus}$) berechnet sich zu 7,3% und der Gehalt an Polyäthylenoxidsegmenten zu 69%.

*Herstellung eines Sulfonatgruppen tragenden Polyäthermonoalkohols 2*

Nach dem vorstehend beschriebenen Verfahren wird ein Sulfonatgruppen tragender Polyäthermonoalkohol aus folgenden Ausgangsmaterialien hergestellt:

855 g Polyäther aus Äthylenoxid, gestartet auf Allylalkohol (OH-Zahl: 65,5)
190 g $Na_2S_2O_5$
2000 g Wasser

Der nach Abdestillieren des Wassers verbleibende Rückstand wird aus Viskositätsgründen vor der Druckfiltration mit 300 g Toluol verdünnt. Abdestillieren des Toluols liefert danach ein hellgelbes, hochviskoses Produkt, das bei Raumtemperatur langsam kristallisiert. Der analytisch bestimmte Schwefelgehalt beträgt 3,5%. Der Gehalt an Sulfonatgruppen ($SO_3^{\ominus}$) berechnet sich zu 8,3% und der Gehalt an Polyäthylenoxidsegmenten zu 83%.

Beispiel 1

Ansatz:

| | | |
|---|---|---|
| 729 | g | Adipinsäure-Butandiol-Polyester (MG: 900) |
| 154 | g | Sulfonatgruppen tragender Polyäthermonoalkohol 1 |
| 10,7 | g | Trimethylolpropan |
| 399,6 | g | Isophorondiisocyanat |
| 2000 | g | Aceton |
| 119 | g | Isophorondiamin |
| 10 | g | Hydrazinhydrat |
| 2130 | g | entionisiertes Wasser |

Durchführung:

Zu dem bei 100°C im Vakuum entwässerten Polyester gibt man den Sulfonat-Polyäthermonoalkohol und das Trimethylolpropan.

Dann fügt man das Isophorondiisocyanat zu und rührt bei 90°C, bis ein NCO-Wert von 5,2% erreicht ist. Nach Abkühlen auf 50—60°C bringt man das Präpolymer durch Zugabe des Acetons in Lösung. Es wird weiter auf Raumtemperatur gekühlt und sodann unter gutem Rühren nacheinander das Isophorondiamin und das Hydrazinhydrat zugetropft. Nach 5 Minuten wird durch Einrühren des Wassers dispergiert. Man entfernt nun das Aceton durch Vakuumdestillation. Zurück bleibt eine feinteilige Dispersion mit einem Feststoffgehalt von 40% und einer Fordbecherviskosität (4 mm-Düse) von 18 Sekunden. Die Dispersion zeigt im durchscheinenden Licht einen Tyndall-Effekt.

Der Festkörper der Dispersion enthält 7,5% Polyäthylenoxidsegmente und 9,9 Milliäquivalente Sulfonatgruppen ($—SO_3^{\ominus}$) auf 100 g Festkörper.

Beispiel 2

Ansatz:

| | | |
|---|---|---|
| 967,5 | g | Adipinsäure-Butandiol-Polyester (MG: 2250) |
| 225 | g | Polypropylenoxid-Polyäther, gestartet auf Bisphenol A (MG: 550) |
| 154 | g | Sulfonatgruppen tragender Polyäthermonoalkohol 1 |
| 133,2 | g | Isophorondiisocyanat |
| 285,6 | g | Hexamethylen-(1,6)-diisocyanat |
| 37,4 | g | Biuret-Polyisocyanat aus 2 Mol Hexamethylendiisocyanat und 1 Mol Wasser |
| 222,4 | g | Bis-Ketimin aus Isophorondiamin und Methyläthylketon |
| 12,5 | g | Hydrazinhydrat |
| 2770 | g | entionisiertes Wasser |

Durchführung:

Zu dem bei 100°C im Vakuum entwässerten Gemisch aus dem Polyester, dem Polyäther und dem Sulfonat-Polyäthermonoalkohol gibt man bei 70°C eine Mischung aus dem Isophorondiisocyanat und dem Hexamethylendiisocyanat und rührt bei 80—90°C, bis ein NCO-Wert von 6,2% erreicht ist. Dann kühlt man das Präpolymer auf 60°C ab und gibt nacheinander das Biuret-Polyisocyanat und das Bis-Ketimin zu. Unter gutem Rühren läßt man jetzt das auf 50°C angewärmte Wasser zulaufen, in dem zuvor das Hydrazinhydrat gelöst wurde. Dabei bildet sich eine feinteilige Dispersion mit einem Feststoffgehalt von 40% und einer Fordbecherviskosität (4 mm-Düse) von 14 Sekunden. Die Dispersion zeigt im durchscheinenden Licht einen Tyndall-Effekt.

Der Festkörper der Dispersion enthält 5,5% Polyäthylenoxidsegmente und 7,3 Milliäquivalente Sulfonatgruppen ($—SO_3^{\ominus}$) auf 100 g Festkörper.

Beispiel 3

Ansatz:

| | | |
|---|---|---|
| 1012,5 | g | Adipinsäure-Butandiol-Polyester (MG: 2250) |
| 247,5 | g | Polypropylenoxid-Polyäther, gestartet aus Bisphenol A (MG: 550) |
| 192 | g | Sulfonatgruppen tragender Polyäthermonoalkohol 2 |
| 177,6 | g | Isophorondiisocyanat |
| 243,6 | g | Hexamethylen-(1,6)-diisocyanat |
| 55,8 | g | Biuret-Polyisocyanat aus 3 Mol Hexamethylendiisocyanat und 1 Mol Wasser |
| 175 | g | Bisketimin aus Isophorondiamin und Aceton |
| 15 | g | Hydrazinhydrat |
| 2980 | g | entionisiertes Wasser |

Durchführung:

Es wird wie in Beispiel 2 beschrieben aus dem Polyester, dem Polyäther, dem Sulfonat-Polyäther und den beiden Diisocyanaten ein Präpolymer hergestellt (NCO = 5,6%). Dann wird auf 60°C abgekühlt und nacheinander das Biuret-Polyisocyanat und das Bis-Ketimin zugegeben. Unter gutem Rühren läßt man in dieses Gemisch das auf 50°C angewärmte Wasser zulaufen, in dem zuvor das Hydrazinhydrat gelöst wurde. Dabei bildet sich eine feinteilige Dispersion mit einem Feststoffgehalt von 40% und einer Fordbecherviskosität (4 mm-Düse) von 15 Sekunden. Die Dispersion zeigt im durchscheinenden Licht

einen Tyndall-Effekt. Der Festkörper der Dispersion enthält 7,8% Polyäthylenoxidsegmente und 9,8 Milliäquivalente Sulfonatgruppen (—$SO_3^{\ominus}$) auf 100 g Festkörper.

Beispiel 4

1564 Teile eines Polyesterdiols aus Hexandiol-1,6, 2,2-Dimethylpropandiol-1,3 und Adipinsäure der OH-Zahl 63 wird bei 100°C im Vakuum von etwa 14 Torr entwässert und nach Zugabe von 110 Teilen eines Adduktes aus (i) einem Mol des Polyäthermonoalkohols 1 (OH-Zahl 40,7), (ii) einem Mol Hexandiisocyanat-1,6 und einem Mol (iii) Diäthanolamin mit einem Gemisch aus 244,2 Teilen 3-Isocyanatomethyl-3,5,5-trimethylcyclohexylisocyanat und 185 Teilen Hexandiisocyanat-1,6 versetzt. Die Mischung wird bei 100°C solange gerührt, bis sie einen Gehalt von 4,7% NCO aufweist. Nach dem Abkühlen auf 50—60°C werden 3100 Teile wasserfreien Acetons zugegeben. In diese acetonische Lösung wird ein Gemisch von 119 Teilen 3-Aminomethyl-3,5,5-trimethylcyclohexylamin und 10 Teilen Hydrazinmonohydrat, gelöst in 250 Teilen Wasser langsam eingerührt. Nach 10-minütigem Nachrühren werden 1980 Teile entiontes Wasser unter lebhaftem Rühren eingetragen. Dabei bildet sich eine bläulich-weiße Dispersion des Festkörpers in einer Mischung aus Wasser und Aceton. Nach der destillativen Entfernung des Acetons bleibt eine wäßrige Dispersion des Festkörper der Dispersion enthält 2,72% Polyäthylenoxidsegmente und 3,28 m Äquivalent Sulfonatgruppen (—$SO_{32}^{\ominus}$) auf 100 g Festkörper.

**Patentansprüche**

1. In Wasser lösliche oder dispergierbare Polyurethanelastomere mit weitgehend linearem Molekularaufabau, welche sowohl innerhalb von Polyätherketten eingebaute Äthylenoxideinheiten als auch Sulfonatgruppen aufweisen, dadurch gekennzeichnet, daß sie 0,5 bis 20 Gew.-% an innerhalb von Polyätherketten angeordneten Äthylenoxid-Einheiten der Formel $CH_2$—$CH_2$—O— und 0,1—25 Milliäquivalente pro 100 g Feststoff an Sulfonatgruppen der Formel —$SO_3^{\ominus}$ in Form von end- und/oder seitenständig angeordneten Struktureinheiten der Formel

—O—X—R

aufweisen, wobei

X für eine Polyalkylenoxidkette mit 5 bis 90 Kettengliedern steht, wobei mindestens 40% dieser Kettenglieder Äthylenoxid-Einheiten darstellen und

R einen einwertigen, mindestens eine Sulfonatgruppe —$SO_3^{\ominus}$ aufweisenden Kohlenwasserstoffrest mit 3 bis 18 Kohlenstoffatomen bedeutet.

2. Verfahren zur Herstellung von in Wasser löslichen oder dispergierbaren Polyurethanen gemäß Anspruch 1 durch Umsetzung von organischen Diisocyanaten mit im Sinne der Isocyanat-Polyadditionsreaktion difunktionellen endständige gegenüber Isocyanatgruppen reaktionsfähige Wasserstoffatome aufweisenden organischen Verbindungen des Molekulargewichtbereichs 300—6000 und/oder niedermolekularen Verbindungen mit mindestens zwei gegenüber Isocyanatgruppen reaktionsfähigen Wasserstoffatomen eines unter 300 liegenden Molekulargewichts, unter Mitverwendung von die Löslichkeit bzw. Dispergierbarkeit der Polyurethane gewährleistenden hydrophilen Aufbaukomponenten, sowie gegebenenfalls unter Mitverwendung der in der Polyurethanchemie an sich bekannten Zusatzstoffe, dadurch gekennzeichnet, daß man als hydrophile Aufbaukomponente Struktureinheiten der Formel —O—X—R mit der in Anspruch 1 genannten Bedeutung aufweisende Mono- und/oder Diisocyanate und/oder mono- und/oder difunktionelle Verbindungen mit gegenüber Isocyanatgruppen reaktionsfähigen Wasserstoffatomen in solchen Mengen mitverwendet, daß in dem Polyurethan end- und seitenständig über derartige Gruppen gebunden 0,5 bis 20 Gew.-% an Äthylenoxideinheiten und 0,1 bis 25 Milliäquivalente pro 100 g an Sulfonatgruppen —$SO_3^{\ominus}$ vorliegen, wobei die genannten hydrophilen Gruppen insgesamt in einer die Löslichkeit bzw. Dispergierbarkeit der Polyurethane gewährleistenden Konzentration vorliegen.

**Claims**

1. Water-soluble or water-dispersible polyurethane elastomers having a substantially linear molecular structure and containing both ethylene oxide units incorporated within polyether chains and also sulfonate groups, characterised in that they contain from 0.5 to 20% by weight of ethylene oxide units of the formula $CH_2$—$CH_2$—O— arranged within polyether chains and from 0.1 to 25 milliequivalents per 100 g of solids of sulfonate groups corresponding to the formula —$SO_3^{\ominus}$ in the form of terminally and/or laterally arranged structural units corresponding to the following formula

—O—X—R

in which

X represents a polyalkylene oxide chain containing from 5 to 90 chain members, at least 40% of these chain members being ethylene oxide units and

R represents a monofunctional $C_3$—$C_{18}$-hydrocarbon radical containing at least one sulfonate group —$SO_3^-$.

2. A process for producing the water-dispersible or water-soluble polyurethanes claimed in Claim 1 by reacting organic diisocyanates with organic compounds containing terminal isocyanate-reactive hydrogen atoms and having a functionality to two in the context of the isocyanate polyaddition reaction and a molecular weight in the range from 300 to 6000 and/or with low molecular weight compounds containing at least two isocyanate-reactive hydrogen atoms and having a molecular weight below 300 in the presence of hydrophilic synthesis components guaranteeing the solubility or dispersibility of the polyurethanes and optionally in the presence of additives known *per se* in polyurethane chemistry, characterised in that monoisocyanates and/or diisocyanates and/or monofunctional and/or difunctional compounds containing isocyanate-reactive hydrogen atoms and structural units of the formula —O—X—R with the meaning defined in Claim 1 are used as the hydrophilic synthesis component in such quantities that the polyurethane contains — terminally and laterally bound through such groups — from 0.5 to 20% by weight of ethylene oxide units and from 0.1 to 25 milliequivalents per 100 g of sulfonate groups —$SO_3^\ominus$, the hydrophilic groups being present in a total concentration which guarantees the solubility and dispersibility of the polyurethanes.

**Revendications**

1. Polyuréthannes élastomériques solubles ou dispersibles dans l'eau à structure moléculaire largement linéaire, qui présentent tant des motifs oxyde d'éthylène incorporés aux chaînes polyéther que des groupes sulfonate, caractérisés en ce qu'ils présentent 0,5 à 20% en poids de motifs oxyde d'éthylène disposés à l'intérieur de chaînes polyéther de formule $CH_2$—$CH_2$—O— et 0,1 à 25 milli-équivalents par 100 g de matière solide de groupes sulfonate de formule —$SO_3^\ominus$ sous la forme de motifs structuraux à disposition terminale et/ou latérale, de formule:

—O—X—R

où X est une chaîne polyalkylèneoxy ayant 5 à 90 chaînons, au moins 40% de ces chaînons représentant des motifs oxyde d'éthylène et

R un groupe hydrocarboné monovalent, portant au moins un groupe sulfonate —$SO_3^\ominus$, de 3 à 18 atomes de carbone.

2. Procédé de production de polyuréthannes solubles ou dispersibles dans l'eau suivant la revendication 1 par réaction de diisocyanates organiques avec des composés organiques difonctionnels dans le sens de la réaction de polyaddition d'un isocyanate, présentant des atomes d'hydrogène terminaux réactifs vis-à-vis des groupes isocyanate, de poids moléculaire compris dans la plage de 300—6000 et/ou des composés de bas poids moléculaire ayant au moins 2 atomes d'hydrogène réactifs envers des groupes isocyanate, d'un poids moléculaire inférieur à 300, avec utilisation simultanée de composants structuraux hydrophiles assurant la solubilité ou la dispersibilité des polyuréthannes, ainsi que, le cas échéant, avec l'utilisation simultanée des additifs connus dans la chimie des polyuréthannes, caractérisé en ce qu'on utilise comme composant structural hydrophile des mono- et/ou des diisocyanates présentant des motifs structuraux de formule —O—X—R ayant la définition indiquée dans la revendication 1 et/ou des composés monofonctionnels et/ou difonctionnels présentant des atomes d'hydrogène réactifs envers des groupes isocyanate en quantités telles qu'il y ait dans le polyuréthanne en positions terminale et latérale, en liaison par l'intermédiaire de tels groupes, 0,5 à 20% en poids de motifs oxyde d'éthylène et 0,1 à 25 milli-équivalents par 100 g de groupes sulfonate —$SO_3^\ominus$, les groupes hydrophiles mentionnés étant présents au total à une concentration assurant la solubilité ou la dispersibilité des polyuréthannes.